# EUROPÄISCHE PATENTSCHRIFT

(11) **EP 1 308 641 B1**
(45) Veröffentlichungstag und Bekanntmachung des Hinweises auf die Patenterteilung: **07.01.2009**
(21) Anmeldenummer: 02024156.8
(22) Anmeldetag: 30.10.2002
(51) Int. Cl.: F16C 29/06

(54) **Führungswagen für Profilschienenführungen**
Guiding cart for profiled guiding rails
Chariot de guidage pour glissières profilées

(30) Priorität: 05.11.2001 DE 10153831
(43) Veröffentlichungstag der Anmeldung: 07.05.2003
(60) Teilanmeldung: 08154766.3
(73) Patentinhaber: Schaeffler KG, 91074 Herzogenaurach (DE)
(72) Erfinder: Greiner, Heinz, 73061 Ebersbach (DE)

(56) Entgegenhaltungen:
- EP-A- 0 845 611
- EP-A- 0 890 754
- DE-A- 3 913 297
- DE-A- 10 005 719
- DE-A- 19 941 926
- FR-A- 2 522 749
- US-A- 5 829 883

## Beschreibung

Die Erfindung betrifft einen Führungswagen für Profilschienenführungen. Eine solche bekannte Führung zeigt die Druckschrift EP 0 351 499 B1.

Weitere bekannte Ausführungen, wie z. B. in der Druckschrift EP 0 845 611 A1 beschrieben, weisen bei Führungswagen, welche Umlaufführungen mit Ketten bilden, die Merkmale eines kantenlosen Umlaufes ihres jeweiligen Wälzkörper-Umlaufsystems auf, erlauben jedoch durch das gewählte Fertigungsverfahren des Ausspritzens nicht, geschlossene Ketten zu verwenden.

Eine Hauptaufgabe der Kette, das Ausrichten und Hereinziehen der Wälzkörper aus dem Rücklauf in die Tragzone, kann bei nicht geschlossenen Ketten nur unvollständig gelöst werden. Die Wälzkörper werden, je nach Stellung der Trennstelle, nicht gezogen sondern geschoben.

Das wirkt sich nachteilig aus, besonders bei vertikalem Einbau durch erhöhte Reibung, da die Kette die Wälzkörper nicht im Kanal ausrichtet. Außerdem werden die Umlenkteile durch erhöhte Fliehkräfte beansprucht. Die Ausspritzlösung ist zudem sehr werkzeugintensiv und damit teuer. Bei Ausspritzlösungen muß in Bewegungsachsrichtung ausgespritzt werden, um konstante Kanalquerschnitte zu erreichen. Dabei ist es nur möglich, die Innenseiten des Umlaufs vollständig auszubilden. Die äußeren Umlenkteile, die bei vollkugeligen Systemen und bei nicht geschlossenen Ketten die Umlenkung und die Einund Ausleitung der Wälzkörper übernehmen müssen, müssen dabei angefügt werden, so daß immer eine Trennung vorhanden ist.

Aus der Druckschrift DE 100 05 719 A1, siehe Oberbegriff des Anspruchs 1, ist es bekannt, Tragkörper so zu gestalten, daß sie minimale Bauhöhen aufweisen und es möglich ist, Laufbahnen und Führungskonturen gemeinsam und damit mit höchst präziser Zuordnung zueinander zu schleifen. Ebenso ist bekannt, daß die Führung der Wälzkörper dadurch an einem Teil erfolgen kann. Dieses begrenzt durch im Querschnitt nach außen verengte Kanäle die Wälzkörper in beiden Ebenen und hält sie somit exakt in der Umlaufbahn und Ebene der Traglaufbahnen. Das führt zu einem nahezu ungestörten Einlaufverhalten.

Eine solche Lösung ist grundsätzlich geeignet, vollkugelige Führungen zu gestalten, ebenso Führungen mit Distanzhaltern oder Führungen mit zwei Einzelkäfigen, die getrennt umlaufen, wobei die Verbindungsstege der Distanzhalter ober- und unterhalb der Laufbahnebenen liegen.

Da zwischen den Laufbahnen aus Festigkeits- und Steifigkeitsgründen des Wagens ein Abstand benötigt wird, ist es allerdings sinnvoll, den Verbindungssteg der Trennstücke einer Kette zwischen die Laufbahnen zu legen, damit der Bauraum optimal ausgenutzt wird.

In der japanischen Offenlegungsschrift Nr. 5-126 149 ist ein Käfig gezeigt, der die aus handelsüblichen Pendelkugellagern bekannte Form hat. Er ist allerdings elastisch um die Zentralachse. Ein solcher zweireihiger Käfig ist unverlierbar zwischen den Kugelreihen angeordnet und kann als geschlossener Käfig in die ebenfalls geschlossene Umlaufbahn eines aus Einzelführungsteilen gebauten Umlaufkanals eingebaut werden.

Das Bild in obiger japanischer Patentanmeldung zeigt nicht, daß die Kette geschlossen ist und hat auch keinen die Wälzkörper allseitig umschließenden Kanal, ebenso wenig eine erkennbare präzise Zuordnung des Kanals zu den Laufbahnen.

### Zusammenfassung der Erfindung

Die Aufgabe der Erfindung besteht darin, einen Führungswagen zu schaffen, bei dem mit an einem Tragkörper fixierten Einzelteilen ein Umlaufsystem erzeugt werden kann, das einen kantenlosen und somit störungsfreien Umlauf ermöglicht. Ein solcher Umlauf soll einem Umlauf wenigstens gleichkommen, eher jedoch diesen übertreffen, wie er sich bei einem Linearlager nach der Druckschrift EP 0 470 357 A1 ergibt. Der Führungswagen soll also einen optimal zur Laufbahn orientierten Umlaufkanal aufweisen, ohne das Fertigungsverfahren des Ausspritzens - das für Rollenumlaufeinheiten vorteilhaft ist - verwenden zu müssen. Das benutzte Fertigungsverfahren soll es erlauben, besonders niedrig bauende Elemente zu schaffen und vollkugelige Anordnungen mit offenen oder geschlossenen Ketten zu verwenden.

Zur Lösung der Aufgabe, siehe Anspruch 1, wird ein Führungswagen vorgeschlagen für innenoder außenprofilierte Tragschienen, vorzugsweise in O-Anordnung, an dem ein im wesentlichen C-förmiger geschlossener Umlaufkanal angeordnet ist, der die Wälzkörper vollständig außerhalb der Tragzone führt und der formschlüssig befestigt ist, so daß ein kantenloser Umlauf erfolgen kann. Der Umlenkkörper für die Führungsteile, die den Kanal bilden, werden stirnseitig durch bekannte Fügeverfahren, beispielsweise Ultraschallschweißen, Laserschweißen oder Kleben, verbunden, so daß ein selbsthaltender Verbund entsteht.

### Beschreibung der Zeichnung

Ausführungsbeispiele der Erfindung sind der Zeichnung dargestellt und werden im Folgenden näher beschrieben.

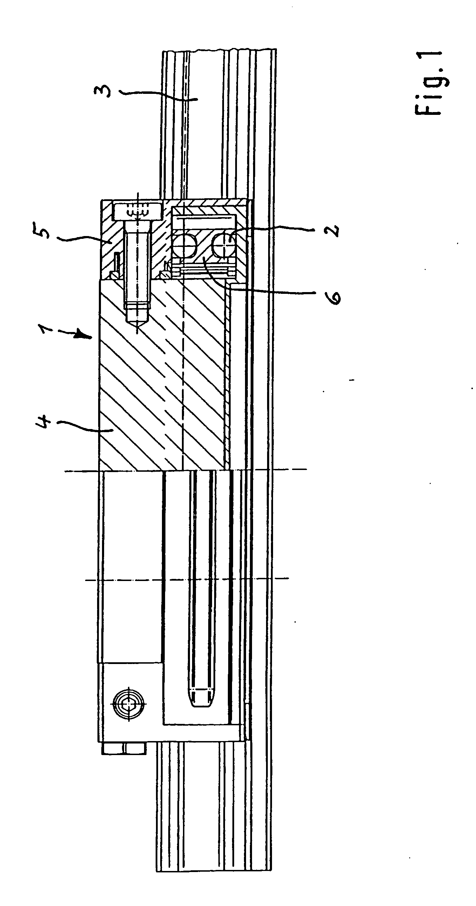

Figur 1 zeigt einen Führungswagen 1, teilweise in der Seitenansicht und teilweise im Längsschnitt, der über umlaufende Wälzkörper 2 an einer Führungsschiene 3 abgestützt und längs dieser verfahrbar ist. Er besteht aus einem Tragkörper 4, an dessen beiden in die Bewegungsrichtungen weisenden Stirnseiten Umlenkkörper 5 angeordnet sind. Diese enthalten als Einzelteile eines Umlaufsystems Teile eines Käfigs 6, in welchem an jeder Längsseite der Führungsschiene 3 zwei übereinander angeordnete Umlaufreihen von Wälzkörpern geführt sind. In Figur 1 ist zwar die Befestigung eines Umlenkkörpers 5 an dem Tragkörper 4 mit einer Schraube dargestellt, diese kann jedoch entfallen, da die Befestigung erfindungsgemäß durch Schweißen oder Kleben erfolgt.

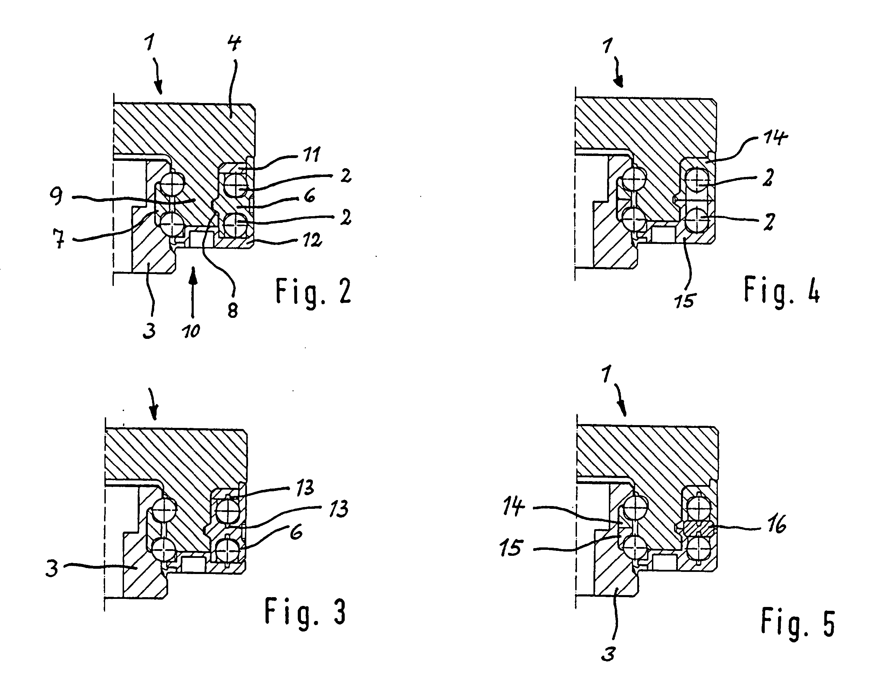

Figur 2 zeigt, dass bei dem im Querschnitt teilweise dargestellten Führungswagen 1 das Mittelteil des Käfigs 6 durch zwei getrennte, nach oben bzw. nach unten verengte Laufbahnquerschnitte gebildet wird, die durch eine durchgängige Wand getrennt sind. Der Käfig 6 besteht aus einem Stück, an welchem sowohl ein Wälzkörperrückhaltesteg 7 zur Führungsschiene hin, als auch die Rücklaufkanäle ausgebildet sind und welches über eine Zentrierfläche 8 positioniert ist und einen Tragkörperschenkel 9 vollständig umschließt, so dass bei der Montage der Käfig 6 von unten in geradliniger Bewegung in Richtung des Pfeiles 10 auf den Tragkörperschenkel 9 aufgeschoben werden kann. Im Falle einer einstückigen Ausbildung des Käfigs 6, wie sie hier in Figur 2 dargestellt ist, wird im Rücklaufkanal die unmittelbare Berührung der Wälzkörper 2 mit dem Tragkörper 4 des Führungswagens 1 durch eine Längsleiste 11 verhindert. Die untere Reihe der Wälzkörper 2 ist mit einem zusätzlichen Verschlußdeckel 12 verschlossen. Die Zentrierflächen 8 des Tragkörpers 4 können zusammen mit den Laufbahnen des Tragkörpers 4 für die Wälzkörper 2 geschliffen werden.

Figur 3 zeigt, dass bei dem Führungswagen 1 Nuten 13 für Kettenstege in die Laufbahnen des Mittelteils des Käfigs 6 und/oder der ansonsten ebenen oberen und unteren Begrenzungsteile eingebracht sind, die zur Aufnahme von Distanzhalterverbindungsstegen dienen.

Figur 4 zeigt, dass bei dem Führungswagen 1 die Umlaufbahnen des Käfigs aus zwei einander zugekehrten, im Schnitt C-förmigen Einzelschalen bestehen, nämlich einem oberen Käfigelement 14 und einem unteren Käfigelement 15. Diese leiten die als Kugeln ausgebildeten Wälzkörper 2 vollständig und allein. Ihre offenen Seiten liegen einander gegenüber und ihre Kanäle sind im Querschnitt an der offenen Seite verengt ausgeführt. Hier besteht der Käfig also aus zwei horizontal getrennten Bauteilen und ermöglicht damit die Verwendung einer endlosen Kette für jede Wälzkörperreihe.

Figur 5 zeigt, dass bei dem Führungswagen 1 zwischen den beiden Käfigelementen 14 und 15 zusätzlich eine Rückhalteplatte 16 angeordnet ist. Es können auch mehrere im wesentlichen ebene oder profilierte oder angeschrägte Rückhalteplatten angeordnet sein.

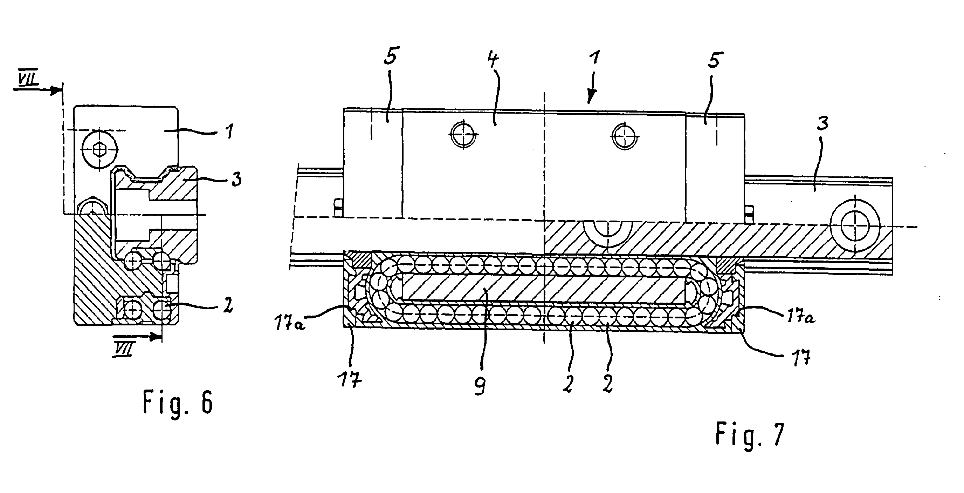

Figur 6 zeigt einen Führungswagen 1, der über in Umläufen angeordnete Wälzkörper 2 an einer Führungsschiene 3 abgestützt ist, teilweise im Querschnitt und teilweise in stirnseitiger Ansicht.

Figur 7 zeigt den Schnitt gemäß Linie VII-VII der Figur 6. Bei diesem Lager sind die Wälzkörper 2 ohne Distanzhalter in den Umläufen angeordnet. An jeder Stirnseite des Führungswagens 1 ist ein Kopfstück 17 über eine formschlüssige Verbindung 17a befestigt.

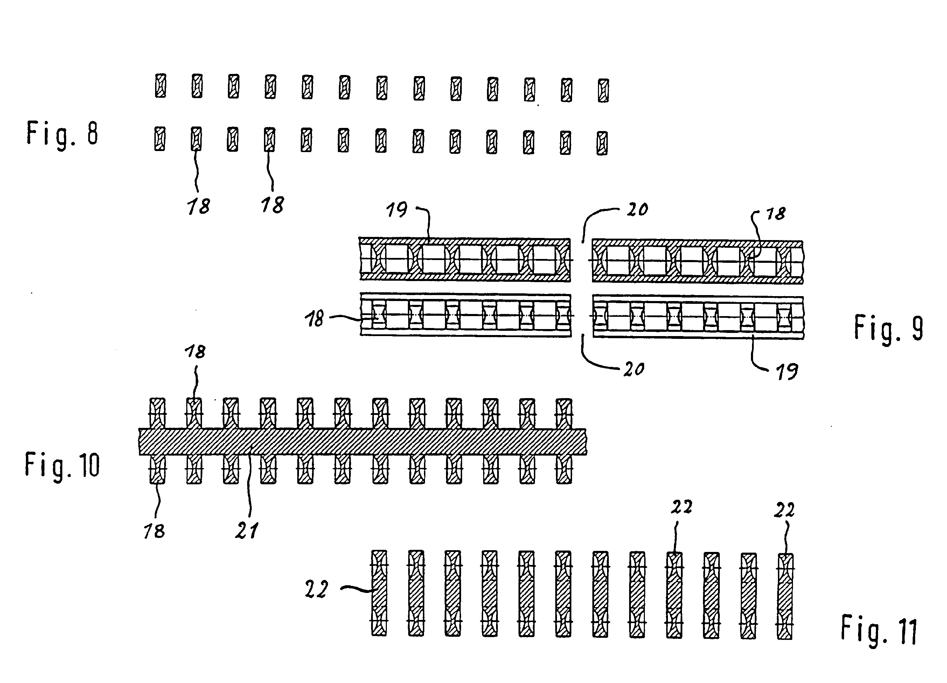

Figur 8 zeigt zwischen den Wälzkörpern 2 anzuordnende Distanzhalter 18 als Einzeldistanzstücke, und zwar so, wie sie in den geradlinigen Bereichen eines Wälzkörperumlaufs angeordnet werden.

Figur 9 zeigt eine Kette 19, die aus elastisch verbundenen Distanzhaltern 18 besteht, einmal im Längsschnitt und einmal in der Seitenansicht. Diese umlaufende Kette 19 ist nicht endlos, sondern sie weist zwei Enden an einer Trennstelle 20 auf. Die Distanzhalter 18 können aber auch in einer endlosen Kette ohne Trennstelle miteinander verbunden sein.

Figur 10 zeigt einen Abschnitt einer Kette 21, mit welcher Distanzhalter 18 für zwei parallele Wälzkörperreihen verbunden sind. Die Kette 21 ist für Kugeln als Wälzkörper ausgebildet. Mit einer solchen Doppelkammkette, die endlos ausgeführt sein kann, lassen sich also zwei Wälzkörperreihen gleichzeitig führen.

Figur 11 zeigt, ebenso wie Figur 8, als Einzeldistanzstücke angeordnete Distanzhalter 22, wobei jeweils ein Distanzhalter 22 Wälzkörper von zwei parallelen Wälzkörperreihen voneinander trennt. Hier sind also einzelne "Doppelkammdistanzstücke" verwendet.

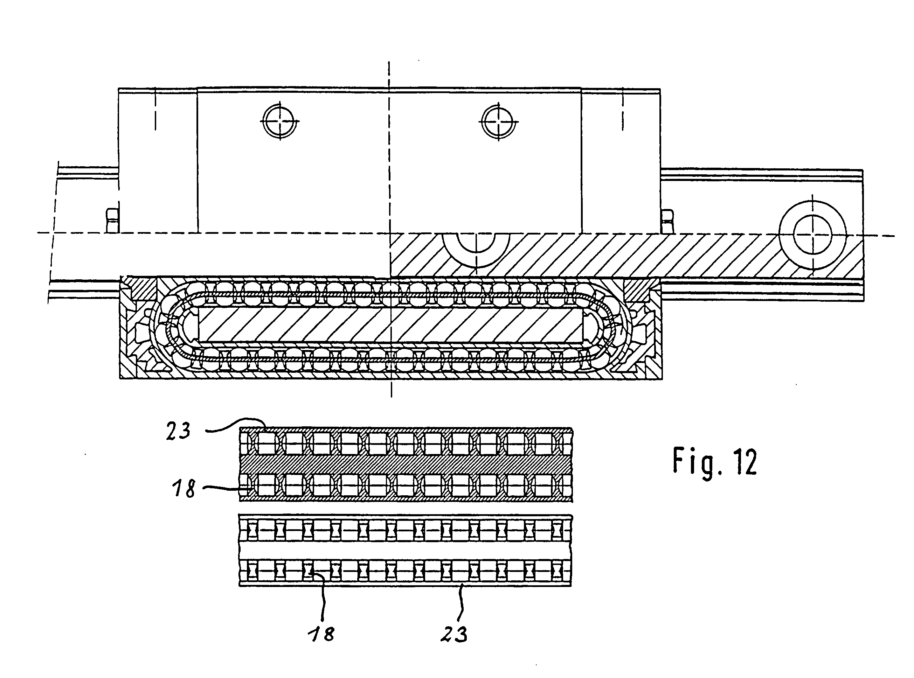

Figur 12 zeigt eine Anordnung, welche mit den Anordnungen nach den Figuren 9 und 10 vergleichbar ist, wobei die Kette 23 jeweils zwei durch elastische Stege verbundene Distanzhalter 18 für zwei parallele Wälzkörperreihen aufweist.

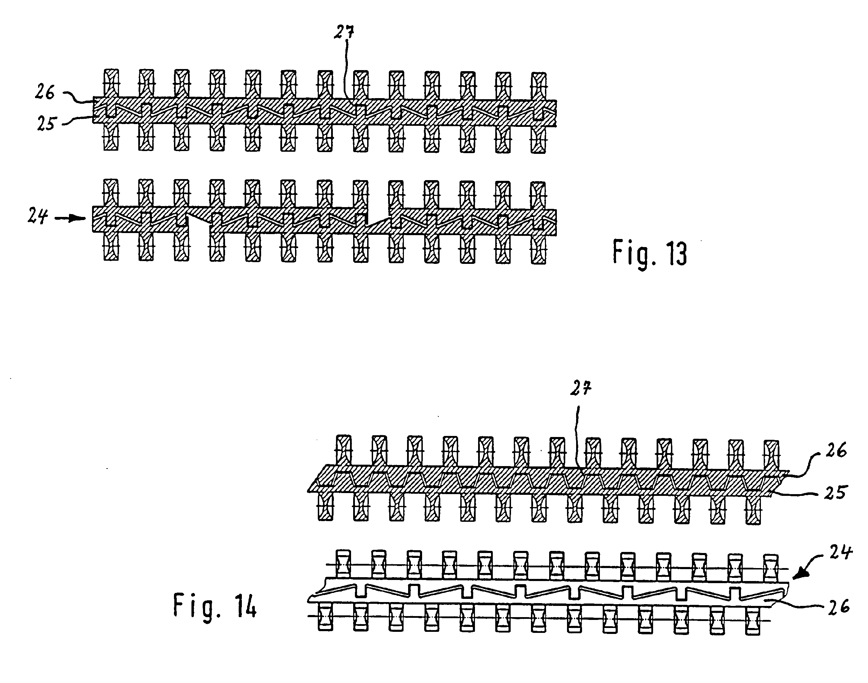

Die Figuren 13 und 14 zeigen jeweils, dass bei dem Führungssystem eine endlose Doppelkammkette 24 verwendet ist, die aus zwei horizontal getrennten Teilketten 25 und 26 besteht. Beide Teilketten sind durch eine formschlüssige Verbindung 27 aneinander befestigt.

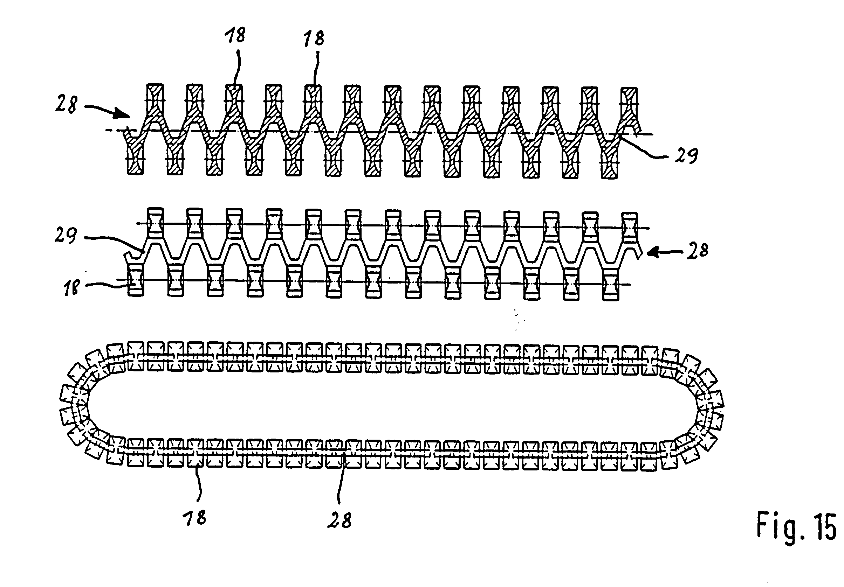

Figur 15 zeigt, ebenso wie Figur 14, dass in dem Führungswagen die Distanzhalter der einzelnen Umlaufverbände jeweils um eine halbe Teilung zueinander versetzt sind. Hier sind außerdem die Distanzhalter 18 der endlos ausgeführten Doppelkammkette 28 über elastische Federstege 29 miteinander verbunden, um Dehnungen aufnehmen zu können.

### Bezugszahlenliste

- 1: Führungswagen
- 2: Wälzkörper
- 3: Führungsschiene
- 4: Tragkörper
- 5: Umlenkkörper
- 6: Käfig
- 7: Wälzkörperrückhaltesteg
- 8: Zentrierfläche
- 9: Tragkörperschenkel
- 10: Pfeil, geradlinige Bewegung
- 11: Längsleiste
- 12: Verschlußdeckel
- 13: Nut
- 14: oberes Käfigelement
- 15: unteres Käfigelement
- 16: Rückhalteplatte
- 17: Kopfstück
- 17a: formschlüssige Verbindung
- 18: Distanzhalter
- 19: Kette
- 20: Trennstelle
- 21: Kette
- 22: Doppelkamm-Distanzhalter
- 23: Kette
- 24: Doppelkammkette
- 25: Teilkette
- 26: Teilkette
- 27: formschlüssige Verbindung
- 28: Doppelkammkette
- 29: Federsteg

## Patentansprüche

1. Führungswagen (1) für eine Profilschienenführung, welche als Linearlager ausgebildet ist, wobei der Führungswagen (1) über umlaufende Wälzkörper (2) an einer Führungsschiene (3) abgestützt und längs dieser verfahrbar ist und aus einem Tragkörper (4) besteht, an dessen beiden in die Bewegungsrichtungen weisenden Stirnseiten **Umlenkkanäle** angeordnet sind, und wobei der Führungswagen (1) Führungsteile enthält, die geschlossene Umlaufkanäle bilden, welche jeweils die Wälzkörper (2) vollständig außerhalb einer Tragzone führen und formschlüssig befestigt sind, wobei an jeder Längsseite der Führungsschiene (3) ein umlaufender Käfig (6) angeordnet ist, in welchem zwei übereinander angeordnete Umlaufreihen von Wälzkörpern (2) geführt sind, wobei der Käfig (6) sowohl einen Wälzkörperrückhaltesteg (7) zu der Führungsschiene (3) hin, an welcher der Führungswagen (1) über die Wälzkörper (2) verschiebbar abgestützt ist, als auch Rücklaufkanäle ausbildet und an dem Tragkörper (4) des Führungswagens (1) über eine Zentrierfläche (8) positioniert ist, wobei er einen Tragkörperschenkel (9) vollständig umschließt, **dadurch gekennzeichnet, dass** die von den Führungsteilen des Führungswagens (1) gebildeten geschlossenen Umlaufkanäle im Wesentlichen C-förmig ausgeführt , wobei der die Führungsteile bildende Käfig (6, 14, 15) jeweils von unten in geradliniger Bewegung auf den zugehörigen Tragkörperschenkel (9) aufgeschoben ist und dabei **die Umlenkkanäle als** Teile des Käfigs (6, 14, 15) in Umlenkkörpern (5) angeordnet sind, die durch bekannte Fügeverfahren, wie Ultraschallschweißen, Laserschweißen oder Kleben, stirnseitig am Tragkörper (4) befestigt sind.

2. Führungswagen nach Anspruch 1, **dadurch gekennzeichnet, dass** an einem Tragkörper (4) befestigte Einzelteile für zwei-, vier-, sechs- oder achtreihige Kugelführungen für begrenzte oder unbegrenzte Hubwege, für vollkugelige Anordnungen, für Anordnungen mit Zwischenstücken oder für Anordnungen mit verbundenen bildende Zwischenstücken (Ketten), nicht geschlossen oder geschlossen vorgesehen sind, wobei die einen kantenlosen Umlauf oder Umlaufkanäle bildenden Einzelteile aus Kunststoff bestehen und wenigstens an den Stirnseiten des Führungswagens, der die Traglaufbahnen enthält, durch bekannte Fügeverfahren wie Ultraschallschweißen, Laserschweißen, Kleben oder andere Fügeverfahren verbunden sind, so dass sich in sich stabile und geschlossene Wälzkörperführungskanäle ergeben, die durch Formschluß seitlich, unten oder stirnseitig am Tragkörper gehalten und angebracht werden.

3. Führungswagen nach Anspruch 1, **dadurch gekennzeichnet, dass** der Käfig (6) in geradliniger Bewegung (10) von dem freien Ende des Tragkörperschenkels (9) aus auf diesen aufgeschoben ist.

4. Führungswagen nach Anspruch 1, **dadurch gekennzeichnet, dass** der Käfig aus zwei getrennten Bauteilen, und zwar einem oberen Käfigelement (14) und einem unteren Käfigelement (15), zusammengesetzt ist.

5. Führungswagen nach nspruch 4, **dadurch gekennzeichnet, dass** zur Befestigung der Käfigelemente (14, 15) ein Kopfstück (17) über eine formschlüssige Verbindung (17a) an dem Führungswagen (1) gehalten ist.

6. Führungswagen nach Anspruch 1, **dadurch gekennzeichnet, dass** zwei parallele Reihen von Wälzkörpern (2) gleichzeitig von einer endlosen, mit einer Doppelkammanordnung von Distanzhaltern (18) versehenen Kette (21) geführt sind.

7. Führungswagen nach Anspruch 6, **dadurch gekennzeichnet, dass** die Doppelkammkette (24) aus zwei einzelnen Teilketten (25, 26) zusammengesetzt ist, welche formschlüssig miteinander verbunden sind.

8. Führungswagen nach Anspruch 6, **dadurch gekennzeichnet, dass** die Distanzhalter (18) der endlos ausgeführten Doppelkammkette (28) über elastische Federstege (29) miteinander verbunden sind.

9. Führungswagen nach Anspruch 1, **dadurch gekennzeichnet, dass** die umlaufenden Wälzkörper (2) durch einzelne Distanzhalter (18) oder durch Doppekammm-Distanzhalter (22) voneinander getrennt sind.

10. Führungswagen nach Anspruch 1, **dadurch gekennzeichnet, dass** in einem Rücklaufkanal eine die Berührung der Wälzkörper (2) mit dem Tragkörper (4) verhindernde Längsleiste (11) angeordnet ist.

11. Führungswagen nach Anspruch 1, **dadurch gekennzeichnet, dass** ein Rücklaufkanal mit einem Verschlussdeckel (12) nach außen verschlossen ist.

12. Führungswagen nach Anspruch 1, **dadurch gekennzeichnet, dass** an dem Tragkörper (4) Zentrierflächen (8) gemeinsam mit Laufbahnen für tragende Wälzkörper (2) in einem Arbeitsgang geschliffen sind.

13. Führungswagen nach Anspruch 1, **dadurch gekennzeichnet, dass** der umlaufende Käfig mit zusammenhängenden, Distanzhalter (18) enthaltenden Kettengliedern als Einzelkette oder Doppelkette endlos oder mit zwei Enden ausgeführt ist, die durch eine Trennstelle (20) gebildet sind.

## Claims

1. Guide carriage (1) for a profiled rail guide configured as a linear bearing, wherein the guide carriage (1) is supported by circulating rolling elements (2) on a guide rail (3) and is transportable along this, and consists of a supporting element (4), on whose two end faces, pointing in the motional directions, diversion channels are provided, and wherein the guide carriage (1) contains guide parts forming closed circulating channels, which respectively guide the rolling elements (2) fully outside a supporting zone and are positively fastened, wherein on each longitudinal side of the guide rail (3) a rotating cage (6) is provided, in which two circulating rows of rolling elements (2), arranged one above the other, are guided, wherein the cage (6) forms both return channels and a rolling element retaining bar (7) in the direction of the guide rail (3), on which the guide carriage (1) is displaceably supported by the rolling elements (2), and is positioned on the supporting element (4) of the guide carriage (1) by means of a centring face (8) and fully encloses a supporting element arm (9), **characterized in that** the closed circulating channels formed by the guide parts of the guide carriage (1) are of substantially C-shaped construction, the cage (6, 14, 15), which forms the guide parts, respectively being slid from below in straight-line motion onto the associated supporting element arm (9), and the diversion channels being provided as parts of the cage (6, 14, 15) in diversion elements (5), which are fastened to the end face of the supporting element (4) by known joining methods, such as ultrasonic welding, laser welding or gluing.

2. Guide carriage according to Claim 1, **characterized in that** single parts, fastened to a supporting element (4), for two, four, six or eight-row ball guides for limited or unlimited stroke travels, for solid-spherical arrangements, for arrangements with intermediate pieces or for arrangements with connected chain-forming intermediate pieces, are provided in unclosed or closed form, the single parts, which form an edgeless circuit or circulating channels, consisting of plastic and, at least on the end faces of the guide carriage containing the supporting tracks, being connected by known joining methods such as ultrasonic welding, laser welding, gluing or other joining methods, so that rolling element guide channels which are intrinsically stable and closed are obtained, which are secured and attached to the side, bottom or end face of the supporting element by positive locking.

3. Guide carriage according to Claim 1, **characterized in that** the cage (6), in straight-line motion (10) from the free end of the supporting element arm (9), can be slid onto the latter.

4. Guide carriage according to Claim 1, **characterized in that** the cage is made up of two separate structural parts, to be precise an upper cage element (14) and a lower cage element (15).

5. Guide carriage according to Claim 4, **characterized in that**, for the fastening of the cage elements (14, 15), a head piece (17) is held on the guide carriage (1) by means of a positive connection (17a).

6. Guide carriage according to Claim 1, **characterized in that** two parallel rows of rolling elements (2) are guided simultaneously by a continuous chain (21) provided with a double-cam arrangement of spacers (18).

7. Guide carriage according to Claim 6, **characterized in that** the double-cam chain (24) is made up of two single part-chains (25, 26), which are positively connected to each other.

8. Guide carriage according to Claim 6, **characterized in that** the spacers (18) of the continuously constructed double-cam chain (28) are connected to one another by elastic spring bars (29).

9. Guide carriage according to Claim 1, **characterized in that** the circulating rolling elements (2) are separated from one another by individual spacers (18) or by double-cam spacers (22).

10. Guide carriage according to Claim 1, **characterized in that** in a return channel there is provided a longitudinal bar (11), which prevents the rolling elements (2) from making contact with the supporting element (4).

11. Guide carriage according to Claim 1, **characterized in that** a return channel is outwardly closed off with a cap (12).

12. Guide carriage according to Claim 1, **characterized in that** on the supporting element (4) centring faces (8) are ground jointly with tracks for supporting rolling elements (2) in a single operation.

13. Guide carriage according to Claim 1, **characterized in that** the rotating cage with associated chain links, which chain links contain spacers (18), is realized as a single or double chain of the endless variety, or with two ends formed by a separation point (20).

## Revendications

1. Chariot de guidage (1) pour une glissière profilée, qui est réalisé sous forme de palier linéaire, le chariot de guidage (1) étant supporté par le biais de corps de roulement en rotation (2) sur un rail de guidage (3) et pouvant être déplacé le long de celui-ci et se composant d'un corps de support (4) dont les deux côtés frontaux tournés dans les directions de déplacement reçoivent des canaux de déviation, le chariot de guidage (1) contenant des pièces de guidage qui forment des canaux périphériques fermés qui guident à chaque fois les corps de roulement (2) complètement en dehors d'une zone de support et qui sont fixés par engagement par correspondance géométrique, une cage périphérique (6) étant disposée sur chaque côté longitudinal du rail de guidage (3), dans laquelle sont guidées deux rangées périphériques de corps de roulement (2) disposées l'une au-dessus de l'autre, la cage (6) formant à la fois une nervure de retenue (7) pour les corps de roulement par rapport au rail de guidage (3), sur lequel le chariot de guidage (1) est supporté de manière à pouvoir glisser sur les corps de roulement (2), ainsi que des canaux de retour, et étant positionnée sur le corps de support (4) du chariot de guidage (1) par le biais d'une surface de centrage (8), la cage entourant complètement une branche (9) du corps de support, **caractérisé en ce que** les canaux périphériques fermés formés par les parties de guidage du chariot de guidage (1) sont réalisés essentiellement en forme de C, la cage (6, 14, 15) formant les parties de guidage étant à chaque fois poussée par le dessus dans un déplacement rectiligne sur la branche (9) associée du corps de support et en l'occurrence les canaux de déviation étant disposés en tant que parties de la cage (6, 14, 15) dans les corps de déviation (5) qui sont fixés du côté frontal au corps de support (4) par des procédés d'assemblage connus, comme un soudage aux ultrasons, un soudage au laser ou un collage.

2. Chariot de guidage selon la revendication 1, **caractérisé en ce que** des parties individuelles fixées à un corps de support (4) pour des glissières à billes à deux, quatre, six ou huit rangées pour des déplacements de course limités ou illimités, pour des agencements à billes entièrement sphériques, pour des agencements avec des pièces intermédiaires ou pour des agencements avec des pièces intermédiaires formant des chaînes, sont prévues sous forme fermée ou non fermée, les pièces individuelles formant un parcours périphérique sans arête ou des canaux périphériques se composant de plastique et étant connectées par des procédés d'assemblage connus comme le soudage aux ultrasons, le soudage au laser, le collage ou d'autres procédés d'assemblage, de sorte que l'on obtienne des canaux de guidage de corps de roulement fermés et stables en soi, qui sont maintenus et montés sur le corps de support par engagement par correspondance géométrique latéralement, en dessous ou du côté frontal.

3. Chariot de guidage selon la revendication 1, **caractérisé en ce que** la cage (6) est poussée sur la branche (9) du corps porteur depuis l'extrémité libre de celui-ci dans un mouvement rectiligne (10).

4. Chariot de guidage selon la revendication 1, **caractérisé en ce que** la cage se compose de deux composants séparés, à savoir un élément de cage supérieur (14) et un élément de cage inférieur (15).

5. Chariot de guidage selon la revendication 4, **caractérisé en ce que** pour la fixation des éléments de cage (14, 15), une pièce de tête (17) est maintenue par le biais d'une connexion (17a) par engagement par correspondance géométrique sur le chariot de guidage (1).

6. Chariot de guidage selon la revendication 1, **caractérisé en ce que** deux rangées parallèles de corps de roulement (2) sont guidées simultanément par une chaîne (21) sans fin, pourvue d'un agencement à double engrènement de dispositifs d'espacement (18).

7. Chariot de guidage selon la revendication 6, **caractérisé en ce que** la chaîne à double engrènement (24) se compose de deux chaînes partielles individuelles (25, 26) qui sont connectées l'une à l'autre par engagement par correspondance géométrique.

8. Chariot de guidage selon la revendication 6, **caractérisé en ce que** les dispositifs d'espacement (18) de la chaîne à double engrènement (28) réalisée sans fin sont connectés les uns aux autres par le biais de pattes de ressort élastiques (29).

9. Chariot de guidage selon la revendication 1, **caractérisé en ce que** les corps de roulement périphériques (2) sont séparés l'un de l'autre par des dispositifs d'espacement individuels (18) ou par des dispositifs d'espacement à double engrènement (22).

10. Chariot de guidage selon la revendication 1, **caractérisé en ce qu'**une baguette longitudinale (11) est disposée dans un canal de retour, pour empêcher le contact des corps de roulement (2) avec le corps de support (4).

11. Chariot de guidage selon la revendication 1, **caractérisé en ce qu'**un canal de retour est fermé vers l'extérieur avec un couvercle de fermeture (12).

12. Chariot de guidage selon la revendication 1, **caractérisé en ce que** des surfaces de centrage (8) sont meulées sur le corps de support (4) en une seule passe de travail conjointement avec les pistes de roulement pour les corps de roulement porteurs (2).

13. Chariot de guidage selon la revendication 1, **caractérisé en ce que** la cage périphérique est réalisée avec des maillons de chaîne continus, contenant des dispositifs d'espacement (18), réalisés sous forme de chaîne individuelle ou de double chaîne, sous forme sans fin ou avec deux extrémités, qui sont formées par un point de séparation (20).
